# EUROPEAN PATENT SPECIFICATION

(11) **EP 4 354 116 B1**
(45) Date of publication and mention of the grant of the patent: **21.01.2026**
(21) Application number: 23201998.4
(22) Date of filing: 06.10.2023
(51) Int. Cl.: G01N 17/02

(54) **MEASUREMENT APPARATUS FOR CORROSION INSPECTION**
MESSVORRICHTUNG ZUR KORROSIONSPRÜFUNG
APPAREIL DE MESURE POUR INSPECTION DE CORROSION

(30) Priority: 12.10.2022 JP 2022164097
(43) Date of publication of application: 17.04.2024
(73) Proprietor: MAZDA MOTOR CORPORATION, Hiroshima 730-8670 (JP)
(72) Inventor: ASADA, Teruaki, Aki-gun, Hiroshima (JP); KABUCHI, Raiki, Aki-gun, Hiroshima (JP); SASAKI, Katsunobu, Aki-gun, Hiroshima (JP); EZAKI, Tatsuya, Aki-gun, Hiroshima (JP); SHIGENAGA, Tsutomu, Aki-gun, Hiroshima (JP); TAKAMI, Akihide, Aki-gun, Hiroshima (JP); SHINOMORI, Masatoshi, Aki-gun, Hiroshima (JP); NAKANISHI, Yuji, Aki-gun, Hiroshima (JP); KOBAYASHI, Akihiro, Aki-gun, Hiroshima (JP)
(74) Representative: Müller-Boré & Partner Patentanwälte PartG mbB

(56) References cited:
- JP-B2- 2 519 786
- US-A- 4 962 360
- US-A1- 2021 325 296
- US-A1- 2022 034 786

## Description

### [Technical Field]

The present invention relates to a measurement apparatus for corrosion inspection.

### [Background Art]

In Patent Literature 1, a corrosion resistance evaluation apparatus for a coated metal material is disclosed. The coated metal material has a resin coating film on a metal base material. In the coated metal material, a corrosion factor such as salt water permeates the coating film and reaches the base material to initiate rust formation, that is, corrosion. A corrosion process of the coated metal material is divided into a process prior to the rust formation and a process of progress of the formed rust. The corrosion resistance evaluation apparatus in Patent Literature 1 evaluates a corrosion suppression period before the rust formation.

More specifically, this corrosion resistance evaluation apparatus includes an electrode arranged on the coating film side and a power source section that applies a voltage between the electrode and the base material. An electrolyte material is arranged between and in contact with the coating film and the electrode. The corrosion resistance evaluation apparatus applies the voltage between the electrode and the base material, and evaluates corrosion resistance of the coated metal material on the basis of a voltage value at which dielectric breakdown of the coating film occurs.

In Patent Literature 2, a corrosion resistance test apparatus that evaluates a progress rate of the corrosion is disclosed. A coated metal material used for this test has two artificial flaws that penetrate the coating film and reaches the metal base material. The corrosion resistance test apparatus evaluates the corrosion resistance by causing corrosion of the coated metal material to progress.

More specifically, this corrosion resistance test apparatus includes a container having two holding sections. The container is placed on a surface of the coated metal material. Each of the two holding sections holds an aqueous electrolyte material. Each of the two holding sections corresponds to respective one of the two artificial flaws. A bottom of the container is opened in each of the holding sections. The aqueous electrolyte material is in contact with the artificial flaw. Each of the two holding sections houses the electrode. The corrosion resistance test apparatus causes the corrosion of the coated metal material to progress by energizing the metal base material via the two electrodes.

In this corrosion resistance test apparatus, the aqueous electrolyte material and the electrodes are housed in the container. A test for the coated metal material using this corrosion resistance test apparatus can be performed by placing the container on the surface of the coated metal material as a test object.

### [Citation List]

### [Patent Literature]

[Patent Literature 1] Japanese Patent No. 6436688
[Patent Literature 2] JP2020-118468A

US 2022/034786 A1 describes a corrosion resistance test apparatus for a coated metal material including a metal base and a surface treatment film.

US 2021/325296 A1 describes a corrosive environment monitoring method capable of short-term to long-term identification of the type of corrosive gas.

JP 2 519786 B2 aims to quantitatively evaluate the degree of deterioration of a coating film by detecting separately and quantitatively an area of the coating film defective part of a pin hole, etc., and an area of a coating film peeling part, respectively, with regard to a deteriorated coating film.

US 4 962 360 A describes a sensor for electrochemical measurement which includes a chamber made of an electrically insulative material and having an open end portion, a super absorbent polymer material filled in the chamber and absorbing at a selected rate a liquid electrolyte, an electrode disposed in the chamber, and a screen which covers the open end portion of the chamber and which prevents the super absorbent polymer material from dropping out from the chamber but permits the liquid electrolyte to transmit through the screen.

### [Summary]

### [Technical Problem]

An evaluation object of the evaluation apparatus described above is a coated metal plate for an automotive part, for example. The apparatus disclosed in Patent Literature 1 or 2 can suitably be used in an automobile manufacturing process or the like in which the part is taken out from a production line after each coating process to check quality of the coating film.

By the way, an automobile sold to a user may have a coated metal plate that corrodes over time. The automobile user is desired to predict when the coated metal plate starts corroding or to detect the corrosion at an early stage.

The progress of deterioration varies by environment where the automobile is used. For example, rusting is relatively likely to occur on the coated metal plate of the automobile that is used in an environment where a snow-melting agent is spread on roads in winter or in an environment where the automobile is exposed to a sea breeze. There is no uniform timing for the rust formation on the coated metal plate. The user's automobile is periodically taken to a maintenance shop, for example. Thus, in the case where the automobile, which is taken to the maintenance shop, can be inspected for the corrosion resistance of the coated metal plate, it is possible, per user, to predict when the coated metal plate starts corroding or to detect the corrosion at the early stage.

However, none of the above-described apparatuses has a structure that enables inspection of the user's automobile for the corrosion resistance of the coated metal plate at the maintenance shop. Thus, a new apparatus that can be used by a mechanic at the maintenance shop is necessary.

In particular, in the case where the user's automobile is inspected for the corrosion of the coated metal plate at the maintenance shop, it is necessary to ensure reliability of such inspection. Since the inspection location cannot be visually recognized with the above apparatus due to the structure thereof, it is difficult to ensure reliability when the apparatus is used at the maintenance shop. In addition, it is expected that the reliability is further improved when a situation during the inspection can be checked later or from the outside of the site.

A technique disclosed herein can ensure reliability of measurement for corrosion inspection of an inspected object.

### [Solution to Problem]

The invention is defined in claim 1. A technique disclosed herein relates to an apparatus that takes a measurement for corrosion inspection of an object or inspected object that has a metal base material and a surface-treated film on the base material. This measurement apparatus for corrosion inspection includes:
a contact section that holds an aqueous electrolyte material and contacts a surface of the surface-treated film; and
a measurement section that has an electrode electrically connected to the surface-treated film via the contact section, and measures an energized state between the electrode and the base material while applying a voltage between the electrode and the base material.

This measurement apparatus for corrosion inspection further includes:
a camera that captures an image of the contact section at least during the measurement; and
an output section that correlates and outputs a measured value by the measurement section with a captured image by the camera.

The measurement apparatus measures the energized state between the electrode, which is electrically connected to the surface-treated film, and the base material while applying the voltage between the electrode and the base material. The contact section holding the aqueous electrolyte material is interposed between the electrode and the surface-treated film. The measurement section measures, as the energized state, a current and/or a voltage between the electrode and the base material. Based on the measured value, it is possible tc evaluate a corrosion suppression period before corrosion occurs to the inspected object.

For the measurement of the energized state between the electrode and the base material, in order to ensure the accurate measurement, it is necessary that the contact section holding the aqueous electrolyte material is not deteriorated and that the contact section is in contact with the surface of the surface-treated film.

The measurement apparatus includes the camera. The camera captures an image of the contact section at least during the measurement. Based on the captured image by the camera, it is possible to confirm that the contact section is not deteriorated and that the contact section is in contact with the surface of the surface-treated film during the measurement.

The measurement apparatus also includes the output section. The output section correlates and outputs the measured value by the measurement section with the captured image by the camera. Since a status of the contact section during the measurement by the measurement section is correlated with the measured value by the measurement section, it is possible to confirm that the measurement has been taken accurately. As a result, it is possible to ensure the reliability of the measurement. In the case where the measurement apparatus is used to take the measurement for the corrosion inspection of an automobile as the inspected object at a maintenance shop, for example, it is possible to ensure the reliability of the measurement.

Here, the output section may transmit the measured value and the captured image to outside by communication.

When the captured image is transmitted to the outside of the apparatus, a situation during the measurement can be checked from the outside of a site at which the measurement is taken. Thus, it is possible to further improve the reliability of the measurement using this measurement apparatus.

The output section may have a storage medium that is detachably attached, and
the output section may store the measured value and the captured image in the storage medium.

By storing the captured image in the storage medium, the situation during the measurement can be checked after the measurement. Thus, it is possible to further improve the reliability of the measurement using this measurement apparatus.

The measurement section measures an energized state while changing an applied voltage over time, and
the output section synchronizes the measured value and the captured image.

In this way, since the measured value by the measurement section and the captured image by the camera are correlated with each other in terms of the time, it is possible to confirm that the measurement has been taken accurately.

The apparatus may be portable,
the measurement apparatus for corrosion inspection may further include a chargeable/dischargeable battery, particularly, a chargeable and dischargeable battery, for power supply,
the measurement apparatus may be connected to a charger that charges the battery during a non-measurement period, and
the camera may start imaging at timing at which connection to the charger is canceled.

Since the camera starts imaging before the measurement apparatus actually starts taking the measurement, the captured image records that the measurement has been taken accurately. Thus, the reliability of the measurement is further improved.

The portable measurement apparatus including the battery can measure the inspected object without any restrictions on locations. The battery is charged during the non-measurement period. In the case where the measurement of the automobile is taken at the maintenance shop, for example, a mechanic detaches the measurement apparatus from the charger, carries the measurement apparatus to the automobile to be measured, and attaches the measurement apparatus to the automobile. In this way, it is possible to measure the coated metal plate of the automobile. This measurement apparatus can satisfy the automobile user's desire to predict when the coated metal plate starts corroding or to detect the corrosion at an early stage.

For the measurement of the energized state between the electrode and the base material, in order to ensure the accurate measurement, it is also necessary that a wet state of the contact section is maintained (in other words, the contact section holds the aqueous electrolyte material) in addition to that the contact section is not deteriorated and that the contact section is in contact with the surface of the surface-treated film.

In the measurement apparatus, at least a portion of the contact section is the sheet, and the contact section is switched between the spread-out state and the accommodated state. The contact section is reduced in size and is in the accommodated state during the non-measurement period. When taking the measurement, a measurer spreads out and brings the contact section in the accommodated state into the spread-out state. When spreading out the contact section, the measurer can confirm that the contact section is not deteriorated and that the wet state of the contact section is maintained.

In the case where the measurement apparatus is used, it is possible to take the measurement after the measurer confirms that the contact section is not deteriorated and that the wet state of the contact section is maintained. The measurement apparatus can take the measurement accurately. In the case where the measurement apparatus is used to take the measurement for the corrosion inspection of a user's automobile, it is possible to ensure the reliability of the measurement.

In addition, since the contact section is reduced in size during the non-measurement period, a surface area of the contact section is small. In the accommodated state, drying of the contact section, which holds the aqueous electrolyte material, is suppressed. In the case where the measurer spreads out the contact section, the wet state of which is maintained, into the spread-out state during the next measurement, the inspected object can be measured by using the measurement apparatus. Thus, it is possible to enhance efficiency of the measurement using the measurement apparatus.

The accommodated state of the contact section is a state where the contact section is folded to be reduced in size or is a state where the contact section is wound to be reduced in size.

### [Advantage Effects]

As it has been described so far, it is possible to ensure the reliability of the measurement for the corrosion inspection of the inspected object by using the measurement apparatus for corrosion inspection.

### [Brief Description of Drawings]

FIG. 1 illustrates a measurement apparatus for corrosion inspection.
FIG. 2 illustrates the measurement apparatus when not measuring.
FIG. 3 is a block diagram of an inspection system including the measurement apparatus.
FIG. 4 illustrates a state of charge of the measurement apparatus.
FIG. 5 illustrates a change in a voltage (a one-dot chain line) that is applied between an electrode and a base material of a coated steel plate, and illustrates a change in a current (a solid line) that flows between the electrode and the base material with application of the voltage.
FIG. 6 illustrates a correlation between an insulation voltage and a corrosion suppression period.
FIG. 7 exemplifies connection points of the electrodes to an automobile.
FIG. 8 exemplifies another connection point of the electrode to the automobile.
FIG. 9 is a flowchart of a measurement procedure using the measurement apparatus.
FIG. 10 is a flowchart of corrosion inspection that is based on a measured value.
FIG. 11 illustrates a modified example of the measurement apparatus.
FIG. 12 illustrates another modified example of the measurement apparatus.
FIG. 13 illustrates further another modified example of the measurement apparatus.

### [Description of Embodiments]

A description will hereinafter be made on an embodiment of a measurement apparatus for corrosion inspection (hereinafter referred to as a measurement apparatus) with reference to the drawings. The measurement apparatus described herein is merely illustrative. All of the features as shown in the drawings may not necessarily be essential.

### (Configurations of Measurement Apparatus and Inspection System)

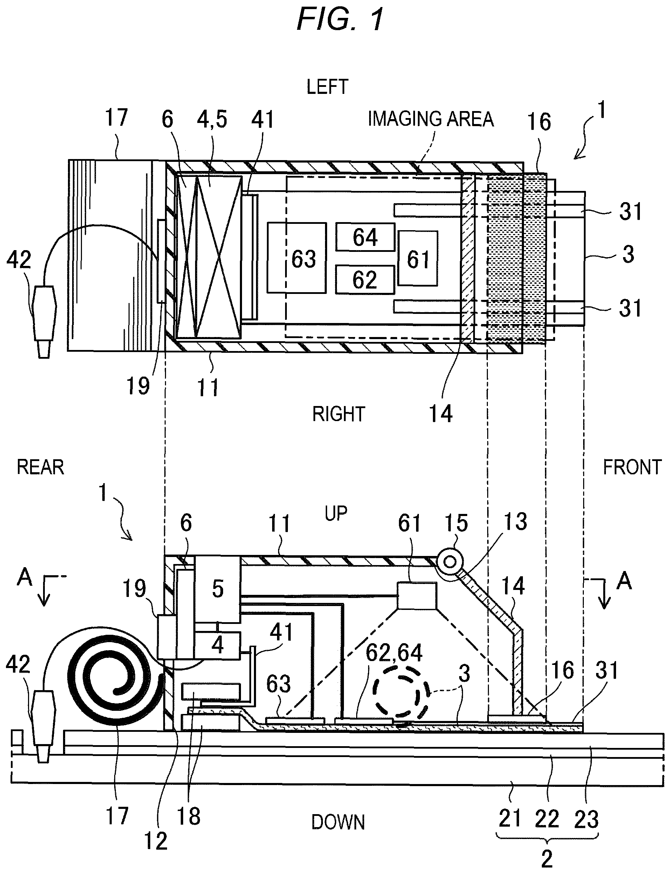

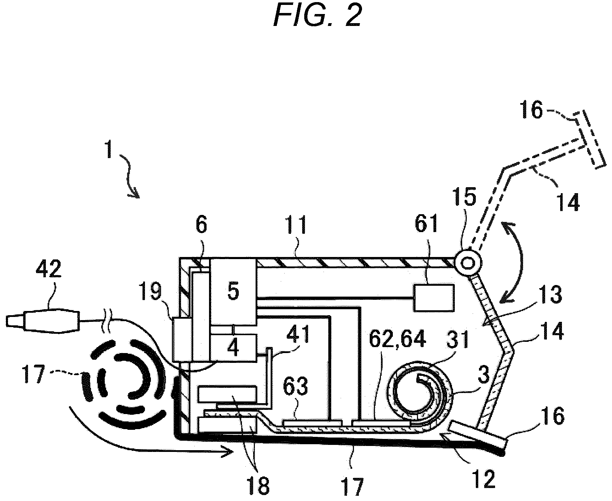

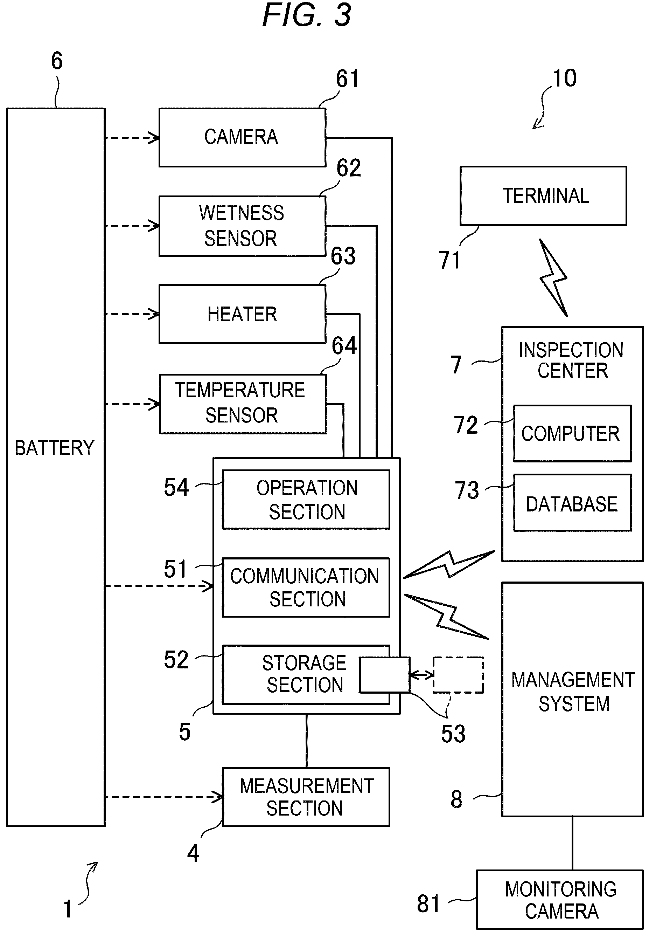

FIGS. 1 and 2 illustrates a measurement apparatus 1. A lower view in FIG. 1 is a cross-sectional view in which the measurement apparatus 1 is seen from a side. An upper view in FIG. 1 is a cross-sectional view that is taken along A-A in the lower view. FIG. 3 illustrates an inspection system 10 that includes the measurement apparatus 1.

In the following description, for convenience of the description, a front-rear direction, a right-left direction, and an up-down direction of the measurement apparatus 1 will be defined as follows. That is, a right-left direction of the sheet for FIG. 1 is defined as a front-rear direction with a right side of the sheet being front and a left side of the sheet being rear, an up-down direction of the sheet for the upper view of FIG. 1 is defined as a right-left direction with an upper side of the sheet being left and a lower side of the sheet being right, and an up-down direction of the sheet for the lower view of FIG. 1 is defined as an up-down direction with an upper side of the sheet being up and a lower side of the sheet being down. However, these directions are only used for the description and are not used to limit a structure of the measurement apparatus 1.

The measurement apparatus 1 takes a measurement for corrosion inspection of an object or an inspected object 2. An example of the inspected object 2 is a metal plate for an automotive part. The metal plate for the automotive part has a metal base material and a surface-treated film on the base material. The metal base material may be a steel plate (including a high-tensile steel plate or an ultra-high-tensile steel plate) or an aluminum alloy plate and is conductive. The surface-treated film may be a resin coating film and may have an insulation property. The inspected object 2 in an illustrative example is a so-called coated steel plate 2. As illustrated in the lower view of FIG. 1, the coated steel plate 2 may have a steel plate 21 as the base material, a chemical conversion coating 22 on the steel plate 21, and an electrodeposition coating film 23 thereon. Each of the chemical conversion coating 22 and the electrodeposition coating film 23 may be the surface-treated film. Here, a thickness of the coated steel plate 2 in FIG. 1 is exaggerated.

The chemical conversion coating 22 plays a role to prevent direct contact of a corrosion factor with the steel plate 21, and also plays a role to react and thereby prevent rusting of a surface of the steel plate 21 by creating an alkaline environment thereon. The chemical conversion coating 22 further plays a role to improve adhesion between the electrodeposition coating film 23 and the steel plate 21. More specifically, the chemical conversion coating 22 is a chromate conversion coating or a zinc phosphate coating, for example.

The electrodeposition coating film 23 may have high throwing power of electrolytic coloring and high uniformity, exhibits high corrosion resistance after a baking process, and thereby plays a role to protect the steel plate 21. More specifically, for example, the electrodeposition coating film 23 is an epoxy resin-based coating material, acrylic resin-based coating material, or the like.

The measurement apparatus 1 takes the measurement for the corrosion inspection of the coated steel plate 2 in a user's automobile at a maintenance shop, for example. The measurement apparatus 1 may use an evaluation principle of the corrosion resistance evaluation apparatus disclosed in Japanese Patent No. 6436688 (the patentee: Mazda Motor Corporation). The measurement apparatus 1 may take the measurement on a corrosion suppression period before the corrosion occurs to the coated steel plate 2. This measurement apparatus 1 can satisfy the automobile user's desire to predict when the coated steel plate 2 starts corroding or to detect the corrosion at an early stage.

### (Structure of Measurement Apparatus)

The measurement apparatus 1 may be portable. The measurement apparatus 1 has a housing 11. Each element of the measurement apparatus 1, which will be described below, is accommodated in the housing 11 at least during a non-measurement period. A mechanic can easily carry the measurement apparatus 1.

The measurement apparatus 1 includes a contact section 3 and a measurement section 4. The measurement apparatus 1 also includes an information processor 5 and a camera 61. The measurement apparatus 1 may also include a wetness sensor 62, a heater 63, a temperature sensor 64, and a battery 6.

### (Contact Section)

The contact section 3 contacts a surface of the electrodeposition coating film 23 of the coated steel plate 2. The contact section 3 is interposed between the electrodeposition coating film 23 and a negative electrode 41, which will be described below. The negative electrode 41 is electrically connected to a rear portion of the contact section 3 as will be described in detail below.

The contact section 3 is a sheet with a water retention characteristic. The contact section 3 holds an aqueous electrolyte material. The contact section 3 as the sheet is flexible enough to be deformed easily.

The contact section 3 may also be nonconductive. For example, a natural fiber (such as cotton) cloth can satisfy all the functions requested for the contact section 3. However, the contact section 3 is not limited to the natural fiber cloth.

The contact section 3 may have an elongated shape that is longer in the front-rear direction than in the right-left direction. As illustrated in FIG. 1, when the measurement apparatus 1 takes the measurement, the contact section 3 may be brought into an unwound, spread-out state. The contact section 3 in the spread-out state contacts the surface of the electrodeposition coating film 23. As illustrated in FIG. 2, when the measurement apparatus 1 does not take the measurement, the contact section 3 is brought into a small, accommodated state. More specifically, the contact section 3 is reduced in size when a front portion of the contact section 3 is wound about an axis that extends in the right-left direction (see also a broken line in the lower view of FIG. 1).

As illustrated in the upper view of FIG. 1, a spiral spring 31 may be affixed to the surface of the front portion of the contact section 3. The spiral spring 31 is made of a thin metal plate material with high elasticity. The spiral spring 31 is located at each of a right end and a left end of the front portion of the contact section 3. FIG. 1 illustrates the spiral spring 31 in a stretched state, and, in this state, the spiral spring 31 extends in the front-rear direction.

During the non-measurement period, the contact section 3 may be wound by an elastic restoring force of the spiral spring 31, which forces the contact section 3 into the accommodated state. Since the contact section 3 has a small surface area in the accommodated state, drying of the contact section 3 may be suppressed during the non-measurement period.

As will be described in detail below, when starting the measurement using the measurement apparatus 1, the mechanic stretches the front portion of the contact section 3 forward against the elastic restoring force of the spiral spring 31 and thereby brings the contact section 3 into the spread-out state. The mechanic can quickly start the measurement using the measurement apparatus 1.

The spiral spring 31 is not an essential element of the contact section 3. The spiral spring 31 can be omitted.

The aqueous electrolyte material may be an electrolyte solution. The electrolyte solution increases the conductivity and plays a role as the corrosion factor of the inspected object 2. Any of various solutions containing a supporting electrolyte can be used as the aqueous electrolyte material. More specifically, for example, an aqueous solution of sodium chloride, potassium chloride, magnesium sulfate, potassium nitrate, calcium phosphate, potassium hydrogen tartrate, or the like can be used as the aqueous electrolyte material. In this embodiment, a sodium chloride solution is used as the aqueous electrolyte material. The contact section 3 with the water retention characteristic holds the sodium chloride solution. In other words, the contact section 3, which is made of the cotton cloth, is wet at least during the measurement.

The measurement apparatus 1 may further include a holding section that holds the aqueous electrolyte material separately from the contact section 3. The holding section may be made of a porous member, for example. In the case where the holding section appropriately supplies the aqueous electrolyte material to the contact section 3, the contact section 3 can hold the aqueous electrolyte material during the measurement.

### (Housing)

As illustrated in FIG. 2, the contact section 3 in the accommodated state is accommodated in the housing 11. The contact section 3 is thereby suppressed from being dried during the non-measurement period.

In the configuration example illustrated in FIGS. 1 and 2, the housing 11 may have a substantially rectangular box shape in which a length in the front-rear direction is longer than a width in the right-left direction. The shape of the housing 11 is not limited to a particular shape. The housing 11 has a lower opening 12 and a front opening 13. The lower opening 12 is opened to a bottom of the housing 11. The front opening 13 is opened to the front of the housing 11.

Through the front opening 13 and the lower opening 12, the mechanic stretches the contact section 3 in the accommodated state or winds the contact section 3 in the spread-out state to house the contact section 3 in the housing 11. The openings of the housing 11 facilitate spreading and accommodation of the contact section 3. As illustrated in FIG. 1, when the contact section 3 is brought into the spread-out state, the front portion of the contact section 3 is spread out to the outside of the housing 11.

As indicated by arrows in FIG. 2, the front opening 13 is opened and/or closed by a front cover 14. The front cover 14 may be attached to the housing 11 via a hinge 15. The front cover 14 may be formed of a transparent material, for example, a transparent resin such as an acrylic resin. In the case where the front cover 14 is formed of the transparent material, the mechanic can see the inside of the housing 11 through the front cover 14 even when the front opening 13 of the housing 11 is closed. In addition, in the case where the front cover 14 is formed of the transparent material, light can be shed on an imaging object when the camera 61, which will be described below, captures an image of the contact section 3 in the housing 11. The housing 11 may also be formed of the transparent material, for example, the transparent resin such as the acrylic resin.

A magnet 16 may be attached to a tip of the front cover 14. When starting the measurement using the measurement apparatus 1, the mechanic opens the front cover 14 to open the front opening 13, stretches the contact section 3 forward, and then closes the front cover 14.

As illustrated in FIG. 1, the magnet 16 may be located on the contact section 3 in the spread-out state. The magnet 16 magnetically attracts the coated steel plate 2. The magnet 16 presses the front portion of the contact section 3, which intends to return to the accommodated state by the elastic restoring force of the spiral spring 31, onto the coated steel plate 2. While the measurement apparatus 1 takes the measurement, the contact section 3 is maintained in a contact state with the surface of the electrodeposition coating film 23 of the coated steel plate 2. The measurement apparatus 1 can accurately measure an energized state between the negative electrode 41 and the steel plate 21 while maintaining the contact state of the contact section 3 with the surface-treated films 22, 23.

The magnet 16 is an example of the maintenance section. The use of the magnet 16 can facilitate the contact of the contact section 3 with the surface-treated films 22, 23 and the maintenance of such a contact state. In addition, the use of the magnet 16 can facilitate release of the contact section 3, which has been maintained in the contact state, after termination of the measurement.

A lower cover 17 is attached to the housing 11. The lower cover 17 opens and/or closes the lower opening 12 of the housing 11. As illustrated in FIG. 1, the lower cover 17 opens the lower opening 12 during the measurement. As illustrated in FIG. 2, the lower cover 17 closes the lower opening 12 during the non-measurement period. During the measurement, the contact section 3 can contact the surface-treated films 22, 23 through the lower opening 12 of the housing 11.

The lower cover 17 may have an elongated shape that is longer in the front-rear direction than in the right-left direction in a manner to correspond to a shape of the lower opening 12 of the housing 11. The lower cover 17 is a sheet that is flexible enough to be deformed easily. As illustrated in FIG. 1, while the measurement apparatus 1 takes the measurement, the lower cover 17 is wound about an axis that extends in the right-left direction, and is located behind the housing 11. As illustrated in FIG. 2, while the measurement apparatus 1 does not take the measurement, the lower cover 17 is stretched forward and thereby closes the lower opening 12 (see an arrow in FIG. 2) .

The lower cover 17 is made of a non-breathable material such as plasticized polyvinyl chloride so as to keep the inside of the housing 11 as airtight as possible when the lower opening 12 is closed. Once the inside of the housing 11 becomes airtight, drying of the contact section 3, which is accommodated in the housing 11, is suppressed.

Here, a magnetic body may be attached to a tip of the lower cover 17. As illustrated in FIG. 2, when the lower cover 17 closes the lower opening 12, the magnetic body at the tip of the lower cover 17 can be attracted to the magnet 16 of the front cover 14. In this way, both of the front cover 14 and the lower cover 17 are maintained in the closed state.

### (Measurement Section)

The measurement section 4 performs an electrochemical measurement. The measurement section 4 has the negative electrode 41 and a positive electrode 42. The negative electrode 41 is configured to be electrically connected to the electrodeposition coating film 23 via the contact section 3. The positive electrode 42 is configured to be electrically connected to the steel plate 21. The measurement section 4 measures the energized state between the negative electrode 41 and the steel plate 21 while applying a voltage between the negative electrode 41 and the steel plate 21. More specifically, a potentio/galvanostat can be used as the measurement section 4.

As illustrated in FIG. 1, the negative electrode 41 may be connected to the rear portion of the contact section 3. In this configuration example, the negative electrode 41 may have an inverted L-shape in side view. The negative electrode 41 is placed on the contact section 3. The contact section 3 and the negative electrode 41 superposed thereon may be held between a pair of magnets 18 in the up-down direction. The pair of magnets 18 maintains a connection state between the negative electrode 41 and the contact section 3 during the measurement by bringing the negative electrode 41 into close contact with the contact section 3. The negative electrode 41 is electrically connected to the electrodeposition coating film 23 via the contact section 3.

As will be described below, for example, in the case where the contact section 3 deteriorates, the mechanic replaces the contact section 3. Since the contact section 3 is held in place by the pair of magnets 18, the mechanic can easily replace the contact section 3 by removing the magnets 18.

Instead of the pair of magnets 18, the measurement apparatus 1 may have a clamp to hold the negative electrode 41 and the contact section 3. The clamp can also maintain the connection state between the negative electrode 41 and the contact section 3 during the measurement and also facilitates the replacement of the contact section 3.

Of the pair of magnets 18, the lower magnet is exposed below the housing 11 through the lower opening 12 during the measurement by the measurement apparatus 1. In addition to the function of holding the negative electrode 41 and the contact section 3, the lower magnet has a function of fixing the measurement apparatus 1 to the coated steel plate 2 with the magnet 16 by attracting the coated steel plate 2 during the measurement by the measurement apparatus 1.

Of the pair of magnets 18, the upper magnet may be a magnet with a relatively large magnetic force, and the lower magnet may be a magnet with the relatively small magnetic force. In this way, the pair of magnets 18 can hold the negative electrode 41 and the contact section 3 with the large force. Meanwhile, since the lower magnet has a small attraction force to attract the coated steel plate 2 of the automobile as the inspected object 2, it is possible to prevent a flaw or the like on the surface of the coated steel plate 2.

In this configuration example, the positive electrode 42 may be formed of a crocodile clip (an alligator clip). As will be described below, the crocodile clip clamps a portion of the coated steel plate 2, from which the chemical conversion coating 22 and the electrodeposition coating film 23 are removed and in which the steel plate 21 is exposed (see the lower view in FIG. 1). In this way, the positive electrode 42 is electrically connected to the steel plate 21. However, the positive electrode 42 is not limited to the crocodile clip.

### (Information Processor)

The information processor 5 may function as a control section that controls the voltage applied between the negative electrode 41 and the steel plate 21 by the measurement section 4. The information processor 5 may also function as an output section that outputs a measured value by the measurement section 4 to the outside of the device. As illustrated in FIG. 3, the information processor 5 has a communication section 51 as the output section and a storage section 52 also as the output section.

The communication section 51 may communicate by near field communication such as Wi-Fi or Bluetooth^{®}. The communication section 51 enables direct or indirect exchange of information between an inspection center 7 and a management system 8. A relay device may be interposed between the measurement apparatus 1 and one of the inspection center 7 and the management system 8. The inspection center 7 may collect the measured value from the measurement apparatus 1 to determine a corrosion state of the inspected object 2. The inspection center 7 will be described below.

The management system 8 may manage the maintenance shop. A monitoring camera 81 may be connected to the management system 8. The monitoring camera 81 is installed at a location where the measurement is taken for the corrosion inspection of the automobile. As will be described below, the management system 8 can determine that the measurement is taken by using the measurement apparatus 1 on the basis of an image captured by the monitoring camera 81.

The communication section 51 may transmit one or various types of information, which includes the measured value by the measurement section 4, to the inspection center 7. A detailed description on the information transmitted by the communication section 51 will be made below.

The storage section 52 has a storage medium 53 that may be detachably attached to the information processor 5. The storage medium 53 may be a memory card that includes nonvolatile memory, for example. The information in the storage medium 53 may be readable by an external device such as a personal computer.

The storage section 52 writes the one or various types of the information, which includes the measured value by the measurement section 4, to the storage medium 53. The information that is written to the storage medium 53 is the same or substantially the same as the information that is transmitted by the communication section 51 described below. The detachment of the storage medium 53 from the information processor 5 by the mechanic is equivalent to the output of the measured value by the measurement section 4 to the outside of the device.

The information processor 5 may also have an operation section 54. The operation section 54 may be operated by the mechanic. The mechanic starts and terminates the measurement using the measurement apparatus 1 through the operation of the operation section 54.

### (Camera, Wetness sensor, Heater, Temperature sensor, and Battery)

The camera 61 includes a lens and an image sensor. The camera 61 may capture a moving image. As exemplified in FIG. 1, the camera 61 may be installed in the housing 11. The camera 61 is located above the contact section 3. For example, the camera 61 captures an image of an area that is indicated by two-dot chain lines in FIG. 1. An imaging area of the camera 61 is from the front portion to an intermediate portion of the contact section 3 in the front-rear direction. The imaging area of the camera 61 at least includes the location where the magnet 16 holds the contact section 3. The imaging area of the camera 61 also includes a location where the magnet 16 does not hold the contact section 3 and none of the wetness sensor 62, the heater 63, and the temperature sensor 64 is installed, in other words, a location where the contact section 3 itself is exposed.

The camera 61 is configured to capture an image of the state of the contact section 3 at least during the measurement.

The state of the contact section 3 includes a deterioration state of the contact section 3 itself and a contact state between the contact section 3 and the electrodeposition coating film 23.

In this measurement apparatus 1, the portion of the contact section 3 that is in contact with the electrodeposition coating film 23 by the magnet 16 may be separated in the front-rear direction from the portion of the contact section 3 that is in contact with the negative electrode 41. Accordingly, the camera 61 can capture the image of the state of the contact section 3 during the measurement. As will be described below, the captured image by the camera 61 is used to check that the measurement is accurately taken by the measurement apparatus 1.

The camera 61 is connected to the information processor 5. The camera 61 outputs the captured moving image to the information processor 5.

The wetness sensor 62 may be installed on the intermediate portion of the contact section 3. The wetness sensor 62 outputs a signal on a wet state of the contact section 3 to the information processor 5. For example, the wetness sensor 62 may detect moisture and output a signal at a level corresponding to moisture content to the information processor 5, or may output a signal to the information processor 5 when the moisture content is higher than a predetermined value. Based on the signal of the wetness sensor 62, it is possible to comprehend that the contact section 3 holds the sufficient aqueous electrolyte material without being dried during the measurement by the measurement apparatus 1.

The heater 63 may also be installed on the intermediate portion of the contact section 3 in the front-rear direction. The heater 63 may be a rubber heater or a film heater, for example. The operation of the heater 63 is controlled by the information processor 5. The heater 63 has a function to regulate temperatures of the aqueous electrolyte material and a measurement location of the coated steel plate 2 to a predetermined temperature range.

The heater 63 may maintain the contact section 3 at such a temperature that at least the aqueous electrolyte material does not freeze. By regulating the temperature of the aqueous electrolyte material and the like into the predetermined temperature range, it is possible to improve reliability of the measured value by the measurement apparatus 1 and thus to improve accuracy of the corrosion inspection.

The temperature sensor 64 is installed on the intermediate portion of the contact section 3. The temperature sensor 64 outputs a signal on the temperature of the contact section 3 to the information processor 5. The temperature sensor 64 may output a signal at a level corresponding to the temperature to the information processor 5, or may output a signal to the information processor 5 when the temperature of the contact section 3 is equal to or higher than a predetermined temperature.

Based on the signal of the temperature sensor 64, it is possible to acknowledge that the contact section 3, which holds the aqueous electrolyte material, does not freeze during the measurement by the measurement apparatus 1.

The battery 6 is a chargeable, particularly a chargeable/dischargeable (chargeable and dischargeable) secondary battery. With power supply from the battery 6, the measurement section 4 applies the voltage to the inspected object 2 during the measurement. In addition thereto, the battery 6 may supply the power to the information processor 5, the camera 61, the wetness sensor 62, the heater 63, and the temperature sensor 64. The measurement apparatus 1 that includes the battery 6 can measure the inspected object 2 without any restrictions on locations.

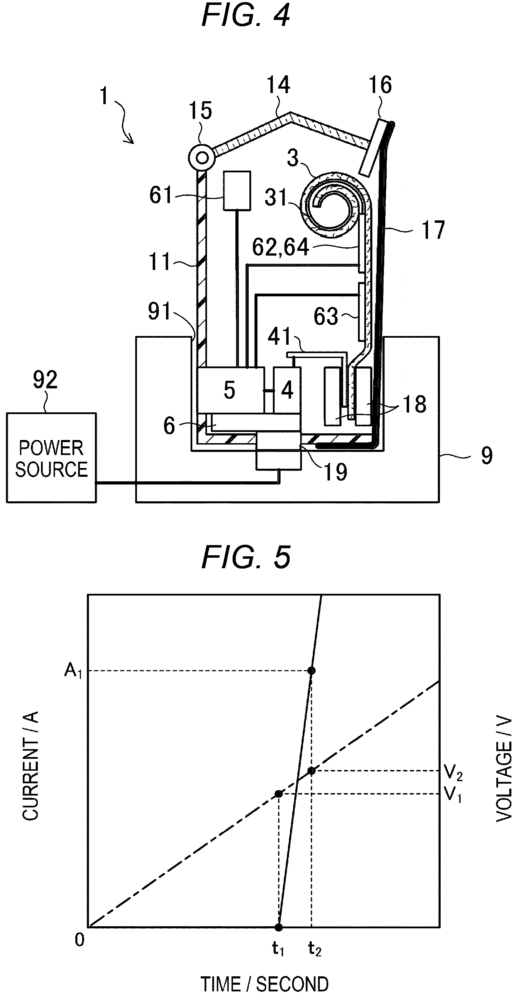

The battery 6 may be charged during the non-measurement period of the measurement apparatus 1. FIG. 4 illustrates a state where a charger 9 charges the battery 6.

The measurement apparatus 1 may include a charging connector 19. The charging connector 19 is connected to the charger 9. As exemplified in FIG. 4, the charger 9 may have a socket 91 into which a rear end of the measurement apparatus 1 is plugged. As described above, when the measurement apparatus 1, in which the contact section 3 is accommodated in the housing 11 and the lower opening 12 and the front opening 13 of the housing 11 are closed, is plugged into the socket 91, the mechanic can charge the battery 6 with power from a power source 92 connected to the charger 9.

### (Inspection Center)

The inspection center 7 may collect information on the measured value from the measurement apparatus 1. The inspection center 7 may be installed at the maintenance shop or may be installed at a location away from the maintenance shop. The inspection center 7 may collect the measured value from each of the plural measurement apparatuses 1. In addition to collecting the measured values from the plural measurement apparatuses 1 at the single maintenance shop, the inspection center 7 may collect the measured values from the one or plural measurement apparatuses 1 at each of the plural maintenance shops. The maintenance shop, from which the inspection center 7 collects the measured value, may be the maintenance shop in a particular region. In this way, the inspection center 7 can efficiently collect the measured values related to the corrosion on the automobiles of various users that are used in a similar use environment.

A computer 72 that is installed in the inspection center 7 may determine the corrosion state of the inspected object 2 on the basis of the collected information on the measured value. Details on this determination will be described below.

The computer 72 may also determine deterioration of the contact section 3, which is used for the measurement, on the basis of the captured image by the camera 61. The inspection center 7 transmits a determination result to a terminal 71 carried by the mechanic, who has taken the measurement, by communication. The terminal 71 at least has a communication function and a display function. The terminal 71 may be a smartphone or a tablet, for example. The mechanic can inform the user of the determination result that is received by the terminal 71.

The inspection center 7 may include a database 73. The information on the collected measured values and the like is accumulated in the database 73. The database 73 also stores information that is used to determine the deterioration of the contact section 3. The computer 72 also determines the deterioration of the contact section 3 on the basis of the information in the database 73.

### (Principle of Corrosion Inspection)

As described above, the negative electrode 41 of the measurement apparatus 1 is electrically connected to the surface of the electrodeposition coating film 23 of the coated steel plate 2 via the contact section 3 that holds the aqueous electrolyte material, and the positive electrode 42 is connected to the steel plate 21 (see the lower view in FIG. 1). Then, under control of the information processor 5, the measurement section 4 measures the energized state between the negative electrode 41 and the steel plate 21 while applying the voltage between the negative electrode 41 and the steel plate 21.

At this time, as indicated by a one-dot chain line in FIG. 5, the measurement section 4 applies the voltage while gradually increasing the voltage over time. A sweep rate of the applied voltage is specifically in a range of 0.1 to 10 V/s or about 0.1 to about 10 V/s, for example, and more preferably, 0.5 to 2 V/s or about 0.5 to about 2 V/s. The measurement section 4 detects the current between the negative electrode 41 and the steel plate 21 with respect to the applied voltage.

As indicated by a solid line in FIG. 5, even in the case where the applied voltage is increased, the current between the negative electrode 41 and the steel plate 21 hardly flows until the applied voltage reaches a voltage value V₁ at time t₁. However, once the applied voltage exceeds the voltage value V₁, a current amount is increased rapidly. At a voltage value V₂ (time t₂), the current amount reaches a threshold value A₁.

This indicates that insulation performance of the surface-treated films 22, 23 against the aqueous electrolyte material as the corrosion factor is maintained until the applied voltage reaches the voltage value V₁, and the current amount is thus suppressed. However, this also indicates that the current amount is increased rapidly due to a fact that (1) an increase in the applied voltage helps the corrosion factor permeate the surface-treated films 22, 23 or (2) the surface-treated films 22, 23 are gradually destroyed, and the corrosion factor then gradually permeates the surface-treated films 22, 23 and eventually reaches the surface of the steel plate 21. In other words, it can be said that the voltage application promotes the permeation of the corrosion factor into the surface-treated films 22, 23, the corrosion factor then reaches the surface of the steel plate 21, the surface-treated films 22, 23 are thereby subjected to dielectric breakdown, and thus the insulation performance thereof is lost.

Then, when the voltage value V₂ at the time when the current amount reaches the threshold value A₁ is set as an insulation voltage, it is considered that the time t₂, at which the applied voltage reaches the insulation voltage V₂, corresponds to a period until the corrosion factor reaches the steel plate 21, that is, the corrosion suppression period of the steel plate 21.

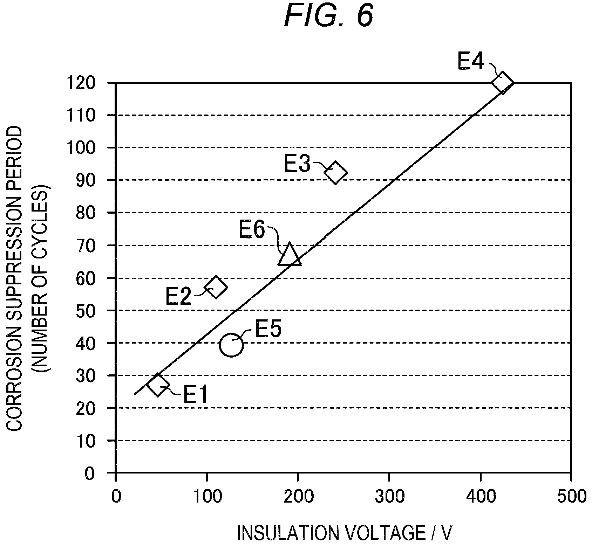

FIG. 6 illustrates a correlation between the corrosion suppression period and the insulation voltage V₂ for the coated steel plate 2, in which the chemical conversion coating 22 and the electrodeposition coating film 23 are formed on the surface of the steel plate 21.

The corrosion suppression period may be acquired by a cyclic corrosion test as an accelerated corrosion test, and the insulation voltage V₂ is acquired as a result of the measurement by the measurement apparatus 1.

The cyclic corrosion test may be a test in which a test piece is subjected to a 24-hour cycle of a salt water spray process (8 hours or about 8 hours), a drying process (8 hours or about 8 hours), and a wetting process (8 hours or about 8 hours) as one cycle. The corrosion suppression period corresponds to the number of the cycles in which swell of the coating film (rust) is formed on 20% of a surface of the test piece.

In FIG. 6, a baking condition may be 150°C (or about 150°C) for 20 minutes (or about 20 minutes) at four points E1 to E4 of the coated steel plates 2 with the electrodeposition coating films 23 whose film thicknesses are 5 µm, 7 µm, 10 µm, and 15 µm, respectively. Meanwhile, the baking conditions are 140°C (or about 140°C) for 15 minutes (or about 15 minutes), 140°C (or about 140°C) for 20 minutes (or about 20 minutes), and 150°C (or about 150°C) for 20 minutes (or about 20 minutes) at three points E5, E6, E3 of the coated steel plate 2 with the electrodeposition coating film 23 in the film thickness of 10 µm, respectively. As illustrated in FIG. 6, the above points follow a regression line even when the film thickness and the baking condition of the electrodeposition coating film 23 are changed, and, since a determination coefficient R² thereof is 0.83, it can be said that there is a high correlation between the corrosion suppression period and the insulation voltage V₂.

Thus, it is possible to evaluate corrosion resistance of the coated steel plate 2 by measuring the insulation voltage V₂ of the surface-treated films 22, 23 of the coated steel plate 2.

Here, in the case where the user's automobile is inspected for the corrosion of the coated steel plate 2 at the maintenance shop, and the voltage may be increased to the insulation voltage V₂, the dielectric breakdown occurs to the surface-treated films 22, 23 in the coated steel plate 2 of the user's automobile. In other words, the coated steel plate 2 of the user's automobile may be deteriorated due to the inspection. To handle such a problem, the measurement section 4 of the measurement apparatus 1 determines in advance a maximum voltage that is lower than the insulation voltage V₂ of the coated steel plate 2, in which the surface-treated films 22, 23 are not deteriorated and the steel plate 21 is not corroded, preferably, lower than the voltage value V₁ at which the current amount starts to be increased.

Then, the measurement section 4 may gradually increase the voltage applied between the negative electrode 41 and the steel plate 21 to the maximum voltage. The measurement section 4 detects the current between the negative electrode 41 and the steel plate 21 with respect to the applied voltage.

In the case where the surface-treated films 22, 23 of the coated steel plate 2 are not deteriorated, the insulation performance of the surface-treated films 22, 23 against the corrosion factor is maintained. Thus, even when the applied voltage is increased, the current hardly flows between the negative electrode 41 and the steel plate 21.

In contrast, in the case where the surface-treated films 22, 23 are deteriorated, the insulation performance of the surface-treated films 22, 23 against the corrosion factor is reduced. Thus, when the applied voltage is increased, the corrosion factor tends to permeate. In other words, the current tends to flow between the negative electrode 41 and the steel plate 21 even when the applied voltage is equal to or lower than the maximum voltage described above.

In addition, in the case where the deterioration of the surface-treated films 22, 23 is further progressed, and the coated steel plate 2 is already corroded, the dielectric breakdown has already occurred to the surface-treated films 22, 23, or the dielectric breakdown occurs to the surface-treated films 22, 23 even at the applied voltage equal to or lower than the maximum voltage. Consequently, the current amount can reach the threshold value A₁.

Accordingly, based on the current value that is measured by the measurement apparatus 1, it is possible to determine the deterioration states of the surface-treated films 22, 23 to the corrosion state of the coated steel plate 2.

In other words, this measurement apparatus 1 applies the voltage between the steel plate 21 and each of the surfaces of the surface-treated films 22, 23 of the coated steel plate 2 while increasing the voltage, and measures the current amount between the steel plate 21 and each of the surfaces of the surface-treated films 22, 23. Based on such measured values, the inspection center 7 can predict when the coated steel plate 2 starts corroding, or can detect the corrosion at the early stage.

During the above-described measurement, the temperatures of the contact section 3 and the coated steel plate 2 are preferably maintained at a constant temperature from 10 to 40 °C (or about 10 to about 40 °C). The temperature is further preferably 20 to 30 °C (or about 20 to 30 °C), and is particularly preferably 23 to 27 °C (or about 23 to 27 °C).

Since the heater 63 is in contact with the coated steel plate 2 via the contact section 3, the heater 63 can maintain the temperatures of the coated steel plate 2 and the contact section 3 at a particular temperature during the measurement.

### (Installation Procedure of Measurement Apparatus)

Next, a description will be made on an installation procedure of the measurement apparatus 1 at the measurement location of the coated steel plate 2.

The mechanic may first disconnect the measurement apparatus 1 from the charger 9, winds the lower cover 17 to open the lower opening 12, and rotates the front cover 14 to open the front opening 13. Then, the mechanic may stretche the contact section 3 in the accommodated state by hand. The contact section 3 is spread out to the outside of the housing 11 through the lower opening 12 and/or the front opening 13. Since both of the lower opening 12 and the front opening 13 of the housing 11 are opened, the mechanic can easily pull out the contact section 3.

Next, the mechanic brings the contact section 3 into the contact state with the electrodeposition coating film 23 of the coated steel plate 2 and closes the front cover 14. In this way, the magnet 16 attracts the coated steel plate 2. The contact section 3 is held between the magnet 16 and the electrodeposition coating film 23. In addition, the pair of magnets 18 attracts the coated steel plate 2. With the magnets 16, 18, the measurement apparatus 1 is placed on the coated steel plate 2 in a manner not to move.

In the spread-out state, the contact section 3 may be significantly spread out to the outside of the housing 11. Thus, the mechanic can easily bring the contact section 3 into contact with the surface of the surface-treated films 22, 23 of the coated steel plate 2. This enhances workability of measurement work using the measurement apparatus 1.

Since a substantial portion of the contact section 3 and the negative electrode 41 are covered with the housing 11 during the measurement, the mechanic is suppressed from touching the contact section 3 or the negative electrode 41 carelessly.

The positive electrode 42 is connected to the steel plate 21 of the coated steel plate 2. For example, as illustrated in FIG. 1, the mechanic may connect the positive electrode 42 to the steel plate 21 that is exposed by scraping off parts of the chemical conversion coating 22 and the electrodeposition coating film 23 from the coated steel plate 2.

### (Examples of Measurement Location)

The measurement for the corrosion inspection of the coated steel plate 2 using the measurement apparatus 1 can be taken at various locations of the automobile.

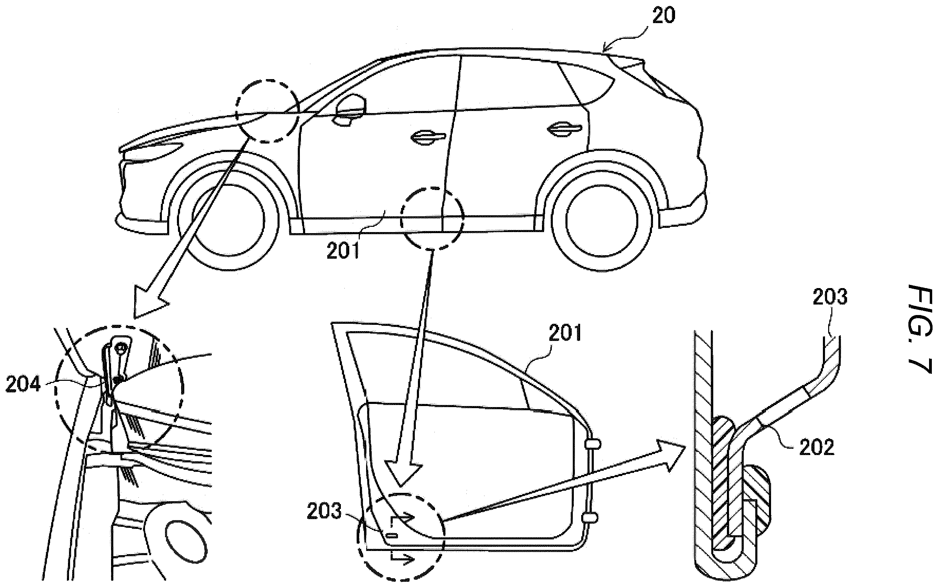

FIG. 7 illustrates an example in which a door 201 of an automobile 20 is set as the inspected object. In this case, the negative electrode 41 of the measurement apparatus 1 may electrically be connected to an inner panel 203 on an inner side of the door 201. As an example, the positive electrode 42 of the measurement apparatus 1 may be connected to a hood hinge 204. More specifically, the mechanic may peel off the surface-treated films 22, 23 of the hood hinge 204 to expose the steel plate 21 and then may connect the crocodile clip as the positive electrode 42 to the hood hinge 204. As the inspection on the user's automobile 20, the negative electrode 41 and/or the positive electrode 42 is preferably connected to a location that is unlikely to appear on external appearance of the automobile 20. The locations where the surface-treated films 22, 23 are peeled off for the measurement only need to be repaired after the measurement.

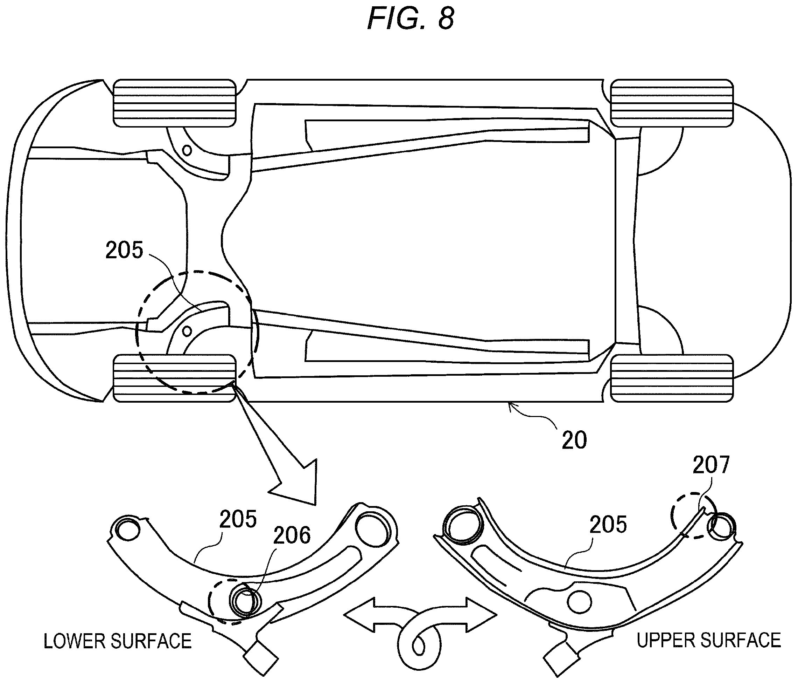

FIG. 8 illustrates another example in which a suspension arm 205 of the automobile 20 is set as the inspected object. The negative electrode 41 of the measurement apparatus 1 may be connected to a lower surface of the suspension arm 205. The lower surface in this case is a surface that faces downward in a state where the suspension arm 205 is attached to the automobile 20. The measurement apparatus 1 can be installed upside down on the lower surface of the suspension arm 205 by the magnets 16, 18.

As an example, the positive electrode 42 of the measurement apparatus 1 may be connected to an upper surface of the suspension arm 205. More specifically, the mechanic may peel off the surface-treated films 22, 23 on the upper surface of the suspension arm 205 to expose the steel plate 21 and then may connect the crocodile clip as the positive electrode 42 to the upper surface of the suspension arm 205. Since the crocodile clip can clamp a target object, the crocodile clip can easily be attached to an edge 207 of the upper surface of the suspension arm 205. A point that the locations where the surface-treated films 22, 23 are peeled off are repaired after the measurement by the measurement apparatus 1 is the same as described above.

In the case where the corrosion inspection of the coated steel plate 2 of the automobile 20 is performed at the maintenance shop, plural measurement points may be set for each of the components, such as a side sill, a subframe, and the suspension arm, and the measurements may be taken. It is possible to accurately determine the corrosion state of each of the components by taking the measured values at the plural measurement points into consideration.

In addition, for example, a welded location may be included as the measurement point. There is a case where, at the welded location, the surface-treated films 22, 23 are likely to be deteriorated due to a spatter or the like during welding thereof. The inclusion of the location where the surface-treated films 22, 23 are likely to be deteriorated as the measurement point for the corrosion inspection is advantageous in preventing the corrosion of the coated steel plate 2.

### (Inspection Procedure in Inspection System)

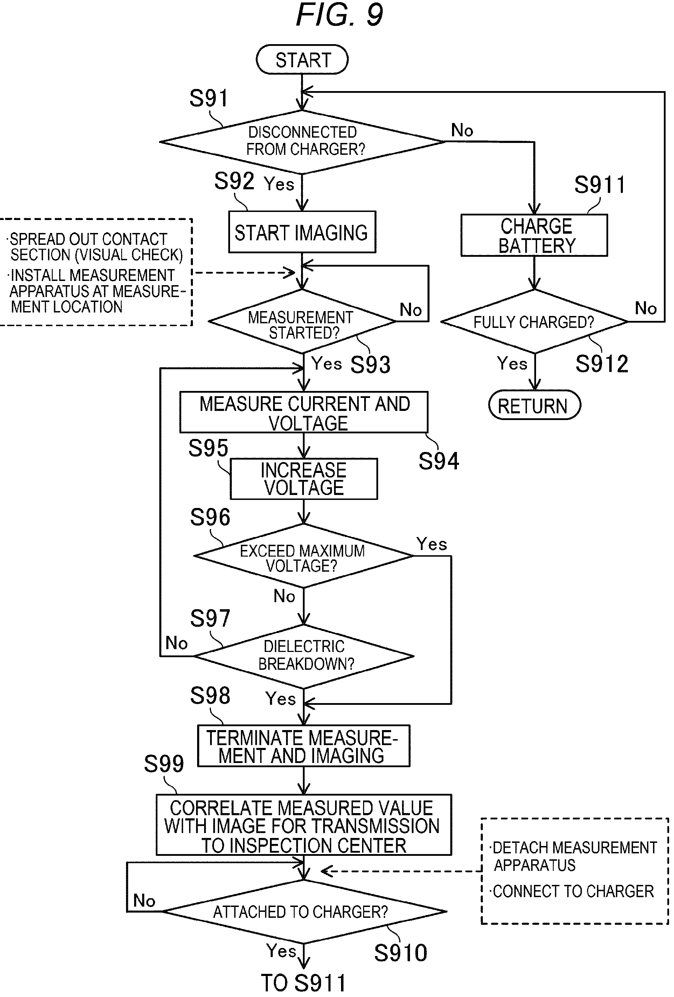

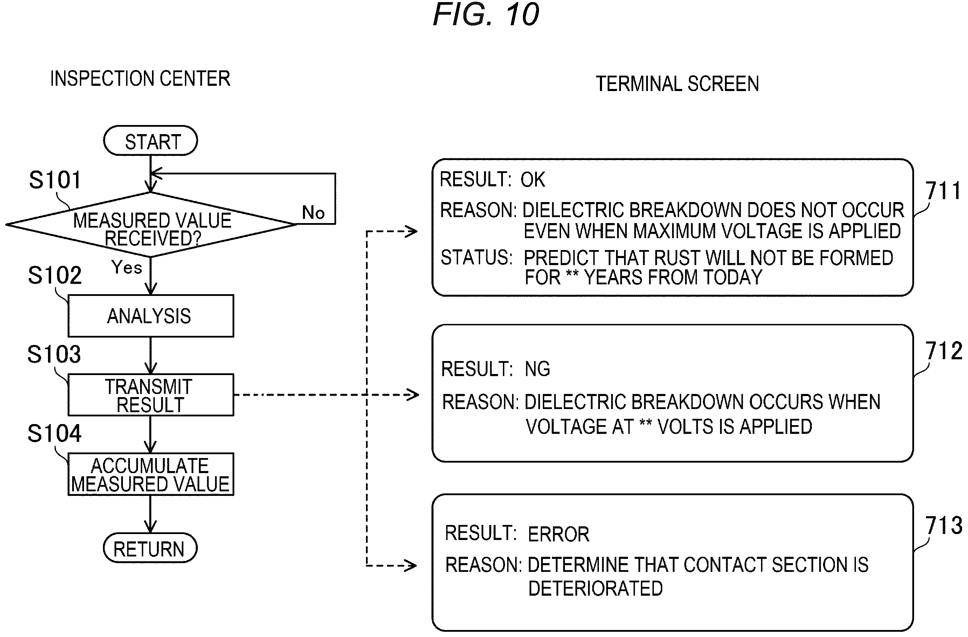

Next, a detailed description will be made on an inspection procedure by the inspection system 10 with reference to flowcharts in FIGS. 9 and 10. The flowchart in FIG. 9 relates to a procedure for taking the measurement for the corrosion inspection of the coated steel plate 2 of the automobile by using the measurement apparatus 1. In the flowchart illustrated in FIG. 9, an order of steps may be rearranged to the extent possible, at least one of the steps may be omitted, or a step may be added. All of the steps as shown in FIG. 9 may not necessarily be essential.

First, in step S91 after the start, the information processor 5 of the measurement apparatus 1 determines whether the measurement apparatus 1 has been disconnected from the charger 9. The information processor 5 may determine whether the measurement apparatus 1 has been disconnected from the charger 9 on the basis of the connection state between the charging connector 19 and the charger 9.

If it is determined No in step S91, in step S911, the measurement apparatus 1 charges the battery 6. In subsequent step S912, the measurement apparatus 1 determines whether the battery 6 is fully charged. If it is determined No in step S912, the processing returns to step S91. If it is determined Yes in step S912, the processing returns.

If it is determined Yes in step S91, the camera 61 of the measurement apparatus 1 starts imaging. The camera 61 continuously captures the image in a period prior to the measurement to during the measurement by the measurement apparatus 1. The image that starts to be captured by the camera 61 before the measurement can be used to confirm that the measurement apparatus 1 takes the measurement accurately. Thus, it is possible to ensure reliability of the measurement using the measurement apparatus 1.

After disconnecting the measurement apparatus 1 from the charger 9, the mechanic pulls out and brings the accommodated contact section 3 into the spread-out state as described above, and then installs the measurement apparatus 1 at the measurement location in the automobile 20. The mechanic can check the state of the contact section 3 prior to the measurement. For example, in the case where the deterioration, such as discoloration, of the contact section 3 occurs, the mechanic replaces the contact section 3 with the new contact section 3. The contact section 3 may be replaced each time the predetermined number of the measurements is taken. Since the contact section 3 is held by the pair of magnets 18, the mechanic can easily replace the contact section 3. In addition, in the case where the contact section 3 is dried, that is, in the case where the contact section 3 does not hold the sufficient aqueous electrolyte material, the mechanic makes the contact section 3 hold the aqueous electrolyte material.

In order to ensure the accuracy of the measurement and take the accurate measurement, it is necessary that, when the measurement apparatus 1 measures the energized state between the negative electrode 41 and the steel plate 21, the contact section 3 holding the aqueous electrolyte material is not deteriorated and that the wet state of the contact section 3 is maintained.

Prior to the measurement, the mechanic spreads out the contact section 3 in the accommodated state to check the state of the contact section 3. For this reason, the measurement apparatus 1 can take the accurate measurement.

In the case where the mechanic has replaced the contact section 3, the mechanic may connect the measurement apparatus 1 to the charger 9 once and then disconnect the measurement apparatus 1 from the charger 9 again. In this way, the camera 61 can start imaging at appropriate timing.

The mechanic follows the above-described procedure to install the measurement apparatus 1 at the measurement location on the coated steel plate 2. In step S93, the measurement apparatus 1 determines whether the mechanic has performed an operation to start the measurement by operating the operation section 54. If it is determined No in step S93, the processing in step S93 is repeatedly executed. The measurement apparatus 1 waits for the operation to be performed. If it is determined Yes in step S93, as described above, the measurement section 4 of the measurement apparatus 1 applies the voltage between the negative electrode 41 and the steel plate 21, and measures the current and the voltage between the negative electrode 41 and the steel plate 21 (step S94).

In step S95, the measurement apparatus 1 increases the voltage. Then, in subsequent step S96, the measurement apparatus 1 determines whether the applied voltage has exceeded the maximum voltage.

As described above, the maximum voltage is set in advance to the voltage that is lower than the insulation voltage. The maximum voltage may be a uniform or constant voltage regardless of a type of the component as the inspected object 2 or may be a different voltage for each of the components.

In the case where the maximum voltage is a different voltage for each of the components, the mechanic only needs to make an input to identify the component to be measured through the operation section 54 before starting the measurement.

In this way, the measurement apparatus 1 can apply the maximum voltage, which corresponds to the component, between the negative electrode 41 and the steel plate 21.

If the applied voltage does not exceed the maximum voltage in step S96, the processing proceeds to step S97. If the applied voltage exceeds the maximum voltage, the processing proceeds to step S98 to terminate the measurement.

In step S97, the measurement apparatus 1 determines whether the dielectric breakdown has occurred to the surface-treated films 22, 23 of the coated steel plate 2 on the basis of the measured current value.

In the case where the current value reaches the threshold value A₁, the measurement apparatus 1 determines that the dielectric breakdown has occurred. If it is determined No in step S97, the processing returns to step S94. The measurement apparatus 1 continues to measure the current value and the voltage value while increasing the applied voltage. If it is determined Yes in step S97, the processing proceeds to step S98 to terminate the measurement.

In step S98, the measurement section 4 of the measurement apparatus 1 terminates the measurement of the current and the voltage, and the camera 61 terminates imaging. In the subsequent step S99, the information processor 5 of the measurement apparatus 1 correlates the measured value by the measurement section 4 with the captured image by the camera 61 and transmits the measured value and the captured image to the inspection center 7. Since the applied voltage is gradually increased (that is, changed) over time during the measurement, the measurement apparatus 1 correlates the measured value with the captured image in regard to the lapse of time and transmits the measured value and the captured image. The measurement apparatus 1 also transmits information on the wet state of the contact section 3, which is based on the signal of the wetness sensor 62, and information on the temperature of the contact section 3, which is based on the signal of the temperature sensor 64, during the measurement to the inspection center 7.

After transmission of the measured value and the captured image, the mechanic detaches the measurement apparatus 1 from the automobile 20, brings the contact section 3 into the accommodated state, and then accommodates the contact section 3 in the housing 11. Thereafter, the mechanic connects the measurement apparatus 1 to the charger 9. In step S910, the measurement apparatus 1 determines whether being attached to the charger 9. The measurement apparatus 1 may determine whether the measurement apparatus 1 has been attached to the charger 9 on the basis of the connection state between the charging connector 19 and the charger 9. If it is determined No in step S910, the processing in step S910 is repeatedly executed. If it is determined Yes in step S910, the processing proceeds to step S911. The measurement apparatus 1 charges the battery 6.

In this way, the measurement using the measurement apparatus 1 is completed.

Here, after the measurement of the current and voltage and imaging are terminated in step S98, or after the information is transmitted to the inspection center 7 in step S99, the measurement of the other measurement location may continuously be taken by using the measurement apparatus 1.

In the case where the measurement of the plural measurement locations are continuously taken, the contact section 3 may be replaced at appropriate timing when needed.

FIG. 10 is a flowchart of processing in the inspection center 7. Also, in the flowchart illustrated in FIG. 10, an order of steps may be rearranged to the extent possible, at least one of the steps may be omitted, or a step may be added. All of the steps as shown in FIG. 10 may not necessarily be essential.

First, in step S101, the computer 72 of the inspection center 7 determines whether the measured value has been received from the measurement apparatus 1. If the measured value has not been received, the processing in step S101 is repeatedly executed. If the measured value has been received, the processing proceeds to step S102.

In step S102, the computer 72 performs analysis on the basis of the received information. In this analysis, the computer 72 determines whether the measurement has been taken accurately on the basis of the image, which has been captured by the camera 61 and received with the measured value.

When determining whether the measurement has been taken accurately, the computer 72 takes the information on the wet state and the temperature of the contact section 3 into consideration. In the case where the measurement has been taken accurately, the computer 72 determines the corrosion state of the coated steel plate 2 on the basis of the measured current value.

In step S103, the computer 72 transmits an analysis result to the terminal 71 of the mechanic who has taken the measurement. Thereafter, in step S104, the computer 72 accumulates the measured value, which is received this time, in the database 73.

Here, one of screens 711 to 713 exemplified in FIG. 10 is displayed on the mechanic's terminal 71 that has received the analysis result from the inspection center 7. The screen 711 is an example of the screen at the time when the coated steel plate 2 does not have a corrosion-related problem. On this screen 711, the analysis result is "OK", a reason therefor is that "DIELECTRIC BREAKDOWN DOES NOT OCCUR EVEN WHEN MAXIMUM VOLTAGE IS APPLIED", and a status is that "PREDICT THAT RUST WILL NOT BE FORMED FOR ** YEARS FROM TODAY".

On the screen 712, the analysis result is "NG", and a reason therefor is that "DIELECTRIC BREAKDOWN OCCURS WHEN VOLTAGE AT ** VOLTS IS APPLIED". The mechanic notifies the automobile user of any of these pieces of the information.

On the screen 713, the analysis result is "ERROR", and a reason therefor is that "DETERMINE THAT CONTACT SECTION IS DETERIORATED". In this case, since the measurement is not taken accurately, the mechanic takes the measurement again by using the measurement apparatus 1.

The computer 72 can determine the deterioration of the contact section 3 by using a known image analysis technique on the basis of the captured image by the camera 61, for example. More specifically, the cloth as the contact section 3 is colored when deteriorated. The computer 72 may calculate a colored area in the contact section 3 on the basis of the captured image by the camera 61. Then, in the case where a percentage of the colored area is higher than a predetermined percentage, the computer 72 may determine that the contact section 3 is deteriorated.

The computer 72 may also determine measurement failure in the following case.
(1) For example, in the case where a percentage of an area of the contact section 3 in the image is equal to or lower than a predetermined percentage on the basis of the captured image by the camera 61, there is a possibility that the contact section 3 is not sufficiently spread out or the contact state between the contact section 3 and the electrodeposition coating film 23 fails. Thus, it is determined as the measurement failure.
(2) In the case where a non-contact state of the contact section 3 with the electrodeposition coating film 23 can be recognized (even momentarily) from the captured image by the camera 61, it is determined as the measurement failure.
(3) In the case where date and time data of the captured image by the camera 61 does not match date and time data of the measured value by the measurement section 4, it is determined that the captured image by the camera 61 is irrelevant to the measured value by the measurement section 4, and it is thus determined as the measurement failure.
(4) In the case where the temperature of the contact section 3 is low (for example, equal to or lower than 0 °C) on the basis of the signal from the temperature sensor 64, it is determined that the contact section 3 is frozen, and it is thus determined as the measurement failure.
(5) In the case where the contact section 3 is dried on the basis of the signal from the wetness sensor 62, it is determined that the aqueous electrolyte material does not exist during the measurement, and it is thus determined as the measurement failure.

In the case where the measurement is not taken accurately, the inspection system 10 may urge the mechanic to take the measurement again as described above. This inspection system 10 enables the accurate measurement and the accurate inspection.

### (Summary)

As it has been described so far, the measurement apparatus 1 includes the contact section 3 that is switched between the spread-out state, where the contact section 3 is spread out during the measurement to contact the surface of the surface-treated films 22, 23, and the accommodated state, where the contact section 3 is reduced in size during the non-measurement period. Since the contact section 3 is switched from the accommodated state to the spread-out state at the time of taking the measurement, the mechanic confirms that the contact section 3 is not deteriorated and that the contact section 3 maintains the wet state. Since the measurement is taken after the confirmation, the measurement apparatus 1 can take the measurement for the corrosion inspection accurately.

In addition, since the contact section 3 is reduced in size during the non-measurement period, the surface area of the contact section 3 is small. In the accommodated state, drying of the contact section 3, which holds the aqueous electrolyte material, is suppressed. In the case where the mechanic spreads out the contact section 3, the wet state of which is maintained, into the spread-out state during the next measurement, the measurement apparatus 1 can take the measurement for the coated steel plate 2. Thus, it is possible to enhance efficiency of the measurement work using the measurement apparatus 1.

The measurement apparatus 1 also includes the camera 61. The camera 61 captures the image of the situation where the contact section 3 is in contact with the surface of the surface-treated films 22, 23. Based on the captured image by the camera 61, it is possible to confirm that the contact section 3 is not deteriorated and that the contact section 3 is in contact with the surface of the surface-treated films 22, 23 during the measurement.

The measurement apparatus 1 further includes the communication section 51 and the storage section 52 as the output sections. Since the measured value by the measurement section 4 and the captured image by the camera 61 are correlated with each other and output, it is possible to confirm that the measurement has been taken accurately at a different location from the measurement location or at later timing after the measurement. In this way, it is possible to ensure the reliability of the measurement.

In addition, since the measured value by the measurement section 4 and the captured image by the camera 61 are correlated with each other in terms of the time, it is possible to confirm that the measurement has been taken accurately.

As a result, for example, in the case where the measurement apparatus 1 is used to take the measurement for the corrosion inspection of the coated steel plate 2 in the automobile at the maintenance shop, it is possible to ensure the reliability of the measurement. By using the measurement apparatus 1, it is possible to satisfy the automobile user's desire to predict when the coated steel plate 2 starts corroding or to detect the corrosion of the coated steel plate 2 at the early stage.

### (Modified Examples)

In the above configuration, the inspection center 7 determines the corrosion state of the inspected object 2 on the basis of the measured value by the measurement apparatus 1. However, the information processor 5 of the measurement apparatus 1 may determine whether the measurement failure has occurred on the basis of the captured image by the camera 61, or the like and may determine the corrosion state of the inspected object 2 on the basis of the measured value. In this case, the measurement apparatus 1 may transmit the analysis result to the terminal 71 of the mechanic.

The measurement section 4 may include a monitor that displays the current value and the voltage value. During the measurement, the camera 61 may capture images of the current value and the voltage value displayed on the monitor along with the status of the contact section 3.

In step S91 illustrated in FIG. 9, the camera 61 starts imaging on the basis of the fact that the measurement apparatus 1 is detached from the charger 9. Instead thereof, the management system 8 may determine that the mechanic who carries the measurement apparatus 1 has approached the automobile to be inspected on the basis of the captured image by the monitoring camera 81, and may transmit an approach signal to the measurement apparatus 1. When the measurement apparatus 1 receives the approach signal, the camera 61 may start imaging. Alternatively, the mechanic may manually start imaging by the camera 61 at appropriate timing.

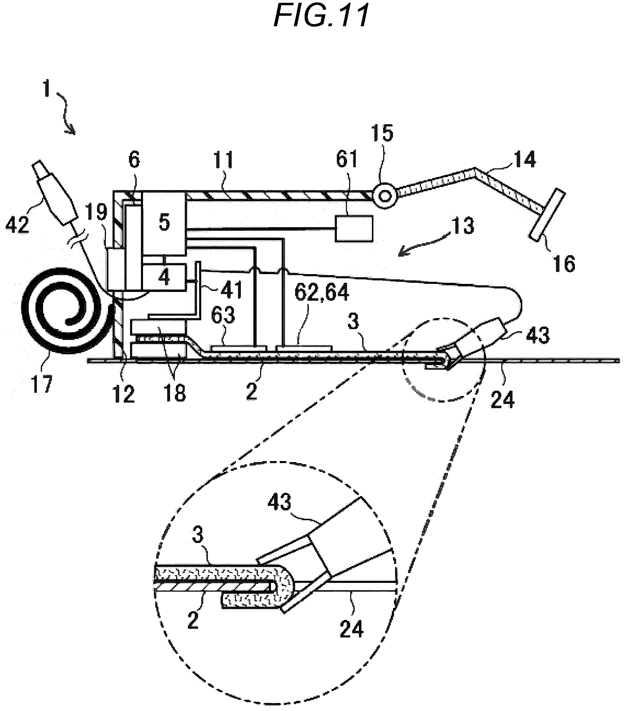

FIG. 11 illustrates a modified example of the measurement apparatus 1. In the measurement apparatus 1 described above, the negative electrode 41 is electrically connected to the rear portion of the contact section 3. Unlike the above, the negative electrode may include a crocodile clip 43. The crocodile clip 43 is electrically connected to the L-shaped negative electrode 41. The L-shaped negative electrode 41 is not connected to the contact section 3.

The tip of the contact section 3 in the spread-out state is wound around an edge of a hole 24 that is provided to the inspected object 2. The crocodile clip 43 holds the contact section 3 by clamping the edge of the hole 24. In this way, the crocodile clip 43 can electrically connect the contact section 3 to the surface of the electrodeposition coating film 23.

The hole 24 may be a drain hole 202 that is formed in the inner panel 203 of the above-described door 201, for example (see FIG. 7). Alternatively, the hole 24 may be a hole 206 that is formed in the suspension arm 205 (see FIG. 8).

By using the crocodile clip 43, the electrical connection between the negative electrode 41 and each of the surface-treated films 22, 23 of the inspected object 2 can be made further easily and appropriately.

In addition, by using the crocodile clip 43, the contact section 3 can be fixed to the surface of the surface-treated films 22, 23. The crocodile clip 43 is an example of the maintenance section that brings the contact section 3 into contact with the surface of the surface-treated films 22, 23 and maintains the contact section 3 in the spread-out state.

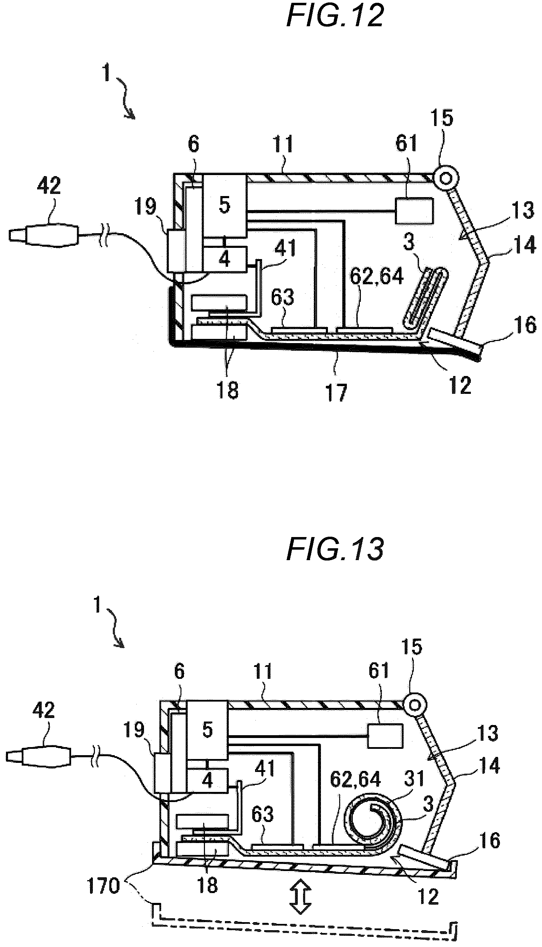

As described above, the contact section 3 is wound about the axis that extends in the right-left direction, so as to be reduced in size. Alternatively, as exemplified in FIG. 12, the contact section 3 is folded to be reduced in size. The folded contact section 3 can be accommodated in the housing 11. Thus, it is possible not only to reduce the surface area of the contact section 3 but also to suppress the contact section 3 from being dried.

The lower cover 17 is not limited to the flexible sheet. For example, as illustrated in FIG. 13, the lower cover 17 may be a lid-shaped cover 170 that is detachably attached to the bottom of the housing 11.

### [Reference Signs List]

1: measurement apparatus
11: housing
12: lower opening
13: front opening
14: front cover
16: magnet (maintenance section)
17: lower cover
2: coated steel plate (inspected object)
21: steel plate (base material)
22: chemical conversion coating (surface-treated film)
23: electrodeposition coating film (surface-treated film)
3: contact section
31: spiral spring
4: measurement section
41: negative electrode
43: crocodile clip (maintenance section)
51: communication section (output section)
52: storage section (output section)
53: storage medium
6: battery
61: camera
7: inspection center (outside)
9: charger

## Claims

1. A measurement apparatus (1) for taking a measurement for corrosion inspection of an object (2) that has a metal base material (21) and a surface-treated film (22, 23) on the base material (21), the measurement apparatus (1) comprising:
a contact section (3) that is configured to hold an aqueous electrolyte material and is configured to contact a surface of the surface-treated film (22, 23);
a measurement section (4) that has a negative electrode (41) electrically connected to the surface-treated film (22, 23) via the contact section (3) and a positive electrode (42) configured to be electrically connected to the base material (21), and is configured to measure a current and/or a voltage between the electrode (41) and the base material (21) while applying a voltage between the electrode (41) and the base material (21) and changing an applied voltage over time;
a camera (61) that is configured to capture an image of the contact section (3) at least during the measurement;
an output section (51, 52) that is configured to synchronize and output a measured value by the measurement section (4) and the captured image by the camera (61); and
a housing (11),
wherein
the housing (11) has a lower opening (12) and a front opening (13),
the front opening (13) is configured to be opened and/or closed by a front cover (14),
a lower cover (17) configured to open and/or close the lower opening (12) of the housing (11) is attached to the housing (11),
the lower cover (17) is made of a non-breathable material,
when the lower cover (17) closes the lower opening (12), both of the front cover (14) and the lower cover (17) are configured to be maintained in a closed state,
the contact section (3) is a flexible sheet with a water retention characteristic for holding the aqueous electrolyte material,
the contact section (3) is configured to be switched between a spread-out state where the contact section (3) is spread out and contacts the surface of the surface-treated film (22, 23) during measurement and an accommodated state where the contact section (3) is wound or folded to be reduced in size during a non-measurement period, and
the contact section (3) in the accommodated state is configured to be accommodated in the housing (11).

2. The measurement apparatus (1) according to claim 1, wherein
the output section (51, 52) is configured to transmit the measured value and the captured image to outside by communication.

3. The measurement apparatus (1) according to claim 1 or 2, wherein
the output section (51, 52) has a storage medium (53) that is detachably attached, and
the output section (51, 52) is configured to store the measured value and the captured image in the storage medium (53).

4. The measurement apparatus (1) according to any one of the preceding claims, wherein
the apparatus is portable.

5. The measurement apparatus (1) according to any one of the preceding claims, the measurement apparatus (1) further comprising
a chargeable battery (6) for power supply, wherein
the measurement apparatus (1) is configured to be connected to a charger (9) that is configured to charge the battery (6) during a non-measurement period, and
the camera (61) is configured to start imaging at timing at which connection to the charger (9) is canceled.

## Patentansprüche

1. Messvorrichtung (1) zum Vornehmen einer Messung für eine Korrosionsprüfung eines Objekts (2), das ein metallisches Grundmaterial (21) und einen oberflächenbehandelten Film (22, 23) auf dem Grundmaterial (21) aufweist, die Messvorrichtung (1) umfassend:
einen Kontaktabschnitt (3), der konfiguriert ist, um ein wässriges Elektrolytmaterial aufzunehmen und konfiguriert ist, um eine Oberfläche des oberflächenbehandelten Films (22, 23) zu kontaktieren;
einen Messabschnitt (4), der eine negative Elektrode (41), die mit dem oberflächenbehandelten Film (22, 23) über den Kontaktabschnitt (3) elektrisch verbunden ist, und eine positive Elektrode (42) aufweist, die konfiguriert ist, um mit dem Grundmaterial (21) elektrisch verbunden zu werden, und konfiguriert ist, um einen Strom und/oder eine Spannung zwischen der Elektrode (41) und dem Grundmaterial (21) zu messen, während eine Spannung zwischen der Elektrode (41) und dem Grundmaterial (21) angelegt und eine angelegte Spannung im Laufe der Zeit geändert wird;
eine Kamera (61), die konfiguriert ist, um mindestens während der Messung ein Bild des Kontaktabschnitts (3) zu erfassen;
einen Ausgabeabschnitt (51, 52), der konfiguriert ist, um einen gemessenen Wert durch den Messabschnitt (4) und das erfasste Bild durch die Kamera (61) zu synchronisieren und auszugeben; und
ein Gehäuse (11),
wobei
das Gehäuse (11) eine untere Öffnung (12) und eine vordere Öffnung (13) aufweist,
die vordere Öffnung (13) konfiguriert ist, um durch eine vordere Abdeckung (14) geöffnet und/oder geschlossen zu werden,
eine untere Abdeckung (17), die konfiguriert ist, um die untere Öffnung (12) des Gehäuses (11) zu öffnen und/oder zu schließen, an dem Gehäuse (11) befestigt ist,
die untere Abdeckung (17) aus einem nicht atmungsaktiven Material hergestellt ist,
wenn die untere Abdeckung (17) die untere Öffnung (12) verschließt, sowohl die vordere Abdeckung (14) als auch die untere Abdeckung (17) konfiguriert ist, um in einem geschlossenen Zustand zu verbleiben,
der Kontaktabschnitt (3) eine flexible Lage mit einer Wasserrückhalteeigenschaft zum Aufnehmen des wässrigen Elektrolytmaterials ist,
der Kontaktabschnitt (3) konfiguriert ist, um zwischen einem verteilten Zustand, in dem der Kontaktabschnitt (3) verteilt ist und während der Messung die Oberfläche des oberflächenbehandelten Films (22, 23) kontaktiert, und einem angepassten Zustand, in dem der Kontaktabschnitt (3) aufgewickelt oder gefaltet ist, um während einer Nicht-Messperiode verkleinert zu werden, umgeschaltet zu werden und
der Kontaktabschnitt (3) in dem untergebrachten Zustand konfiguriert ist, um in dem Gehäuse (11) untergebracht zu werden.

2. Messvorrichtung (1) nach Anspruch 1, wobei
der Ausgabeabschnitt (51, 52) konfiguriert ist, um den gemessenen Wert und das aufgenommene Bild per Kommunikation nach außen zu übertragen.

3. Messvorrichtung (1) nach Anspruch 1 oder 2, wobei
der Ausgabeabschnitt (51, 52) ein Speichermedium (53) aufweist, das abnehmbar befestigt ist und
der Ausgabeabschnitt (51, 52) konfiguriert ist, um den gemessenen Wert und das aufgenommene Bild in dem Speichermedium (53) zu speichern.

4. Messvorrichtung (1) nach einem der vorstehenden Ansprüche, wobei die Vorrichtung tragbar ist.

5. Messvorrichtung (1) nach einem der vorstehenden Ansprüche, die Messvorrichtung (1) ferner umfassend
eine wiederaufladbare Batterie (6) für eine Stromversorgung, wobei
die Messvorrichtung (1) konfiguriert ist, um mit einem Ladegerät (9) verbunden zu werden, das konfiguriert ist, um die Batterie (6) während einer Nicht-Messperiode aufzuladen und
die Kamera (61) konfiguriert ist, um mit einer Bildgebung zu dem Zeitpunkt zu beginnen, an dem die Verbindung zu dem Ladegerät (9) unterbrochen wird.

## Revendications

1. Appareil de mesure (1) permettant d'effectuer une mesure pour une inspection de la corrosion d'un objet (2) qui a un matériau de base métallique (21) et un film traité en surface (22, 23) sur le matériau de base (21), l'appareil de mesure (1) comprenant :
une section de contact (3) qui est conçue pour contenir un matériau électrolytique aqueux et est conçue pour entrer en contact avec une surface du film traité en surface (22, 23) ;
une section de mesure (4) qui a une électrode négative (41) connectée électriquement au film traité en surface (22, 23) par l'intermédiaire de la section de contact (3) et une électrode positive (42) configurée pour être connectée électriquement au matériau de base (21), et est configurée pour mesurer un courant et/ou une tension entre l'électrode (41) et le matériau de base (21) tout en appliquant une tension entre l'électrode (41) et le matériau de base (21) et en modifiant une tension appliquée au fil du temps ;
une caméra (61) qui est configurée pour capturer une image de la section de contact (3) au moins pendant la mesure ;
une section de sortie (51, 52) qui est configurée pour synchroniser et émettre une valeur mesurée par la section de mesure (4) et l'image capturée par la caméra (61) ; et
un boîtier (11),
dans lequel
le boîtier (11) a une ouverture inférieure (12) et une ouverture frontale (13),
l'ouverture frontale (13) est conçue pour être ouverte et/ou fermée par un couvercle frontal (14),
un couvercle inférieur (17) conçu pour ouvrir et/ou fermer l'ouverture inférieure (12) du boîtier (11) est attaché au boîtier (11),
le couvercle inférieur (17) est constitué d'un matériau non perméable,
lorsque le couvercle inférieur (17) ferme l'ouverture inférieure (12), le couvercle frontal (14) et le couvercle inférieur (17) sont tous deux conçus pour être maintenus dans un état fermé,
la section de contact (3) est une feuille flexible avec une capacité de rétention d'eau pour contenir le matériau électrolytique aqueux,
la section de contact (3) est conçue pour passer d'un état étalé où la section de contact (3) est étalée et en contact avec la surface du film traité en surface (22, 23) pendant une mesure et à un état logé où la section de contact (3) est enroulée ou pliée pour être réduite en taille pendant une période de non-mesure, et
la section de contact (3) à l'état logé est conçue pour être logée dans le boîtier (11).

2. Appareil de mesure (1) selon la revendication 1, dans lequel
la section de sortie (51, 52) est configurée pour transmettre la valeur mesurée et l'image capturée à l'extérieur par communication.

3. Appareil de mesure (1) selon la revendication 1 ou 2, dans lequel
la section de sortie (51, 52) a un support de stockage (53) qui est attaché de manière amovible, et
la section de sortie (51, 52) est configurée pour stocker la valeur mesurée et l'image capturée dans le support de stockage (53).

4. Appareil de mesure (1) selon l'une quelconque des revendications précédentes, dans lequel
l'appareil est portable.

5. Appareil de mesure (1) selon l'une quelconque des revendications précédentes, l'appareil de mesure (1) comprenant en outre
une batterie rechargeable (6) pour une alimentation électrique, dans lequel
l'appareil de mesure (1) est configuré pour être connecté à un chargeur (9) qui est configuré pour charger la batterie (6) pendant une période de non-mesure, et
la caméra (61) est configurée pour commencer à prendre des images au moment où une connexion au chargeur (9) est annulée.
